# EUROPÄISCHE PATENTSCHRIFT

(11) **EP 1 213 495 B1**
(45) Veröffentlichungstag und Bekanntmachung des Hinweises auf die Patenterteilung: **30.06.2004**
(21) Anmeldenummer: 01128507.9
(22) Anmeldetag: 29.11.2001
(51) Int. Cl.: F16B 21/02, F16B 5/02

(54) **Halte-Blattfeder-Anordnung und Verbindungsanordnung zum lösbaren Verbinden zweier Bauteile**
Retaining leaf spring arrangement and connecting arrangement for releasable connection of two components
Montage de ressort à lame et dispositif de fixation pour le raccordement démontable de deux éléments

(30) Priorität: 07.12.2000 DE 20020734 U
(43) Veröffentlichungstag der Anmeldung: 12.06.2002
(73) Patentinhaber: Schwarz Verbindungs-Systeme GmbH, 75382 Althengstett (DE)
(72) Erfinder: Schwarz, Helmut, 71263 Weil der Stadt (DE)
(74) Vertreter: Blutke, Klaus Wilhelm, Dipl.-Ing.

(56) Entgegenhaltungen:
- EP-A- 0 611 002
- EP-A- 0 771 696
- EP-A- 1 113 178
- DE-A- 3 511 070

## Beschreibung

Die Erfindung betrifft eine Blattfeder-Halter-Anordnung und eine Verbindungsanordnung zum lösbaren Verbinden zweier Bauteile, welche eine solche Blattfeder-Halter-Anordnung umfaßt.

Es sind eine Vielzahl von Verbindungsanordnungen bekannt, bei denen Ausnehmungen eines Halte-Bolzens mit Federarm-Enden zum Eingriff gebracht werden.

In der Europäischen Patentanmeldung EP-A-0 611 002 ist eine Verbindungsanordnung beschrieben, , bei der in den Hohlraum eines Gewindeeinsatzes Federarme einer einsetzbaren Haltefeder ragen zum Eingriff in einen in diesen Hohlraum einführbaren Haltebolzens (s. FIG.14 dieser Schrift).

In der Europäischen Patentanmeldung EP-A-0 771 696 ist eine lösbare Verbindungsanordnung beschrieben, welche einen Haltebolzen mit zwei Ausnehmungen umfaßt, in welche federnde Rastlaschen eingreifen können (s. FIG.5 dieser Schrift. In der deutschen Offenlegungsschrift DE 35 11 070 A ist eine Vorrichtung zum lösbaren Verbinden zweier mit fluchtenden Öffnungen versehener Bauteile beschrieben, welche einen Haltebolzen mit seitlichen Einkerbungen und eine Haltefeder umfaßt, deren Zungen in die Einkerbungen verriegelnd eingreifen(s. FIG.1 dieser Schrift).

In der Europäischen Patentanmeldung EP 1 113 178 ist eine Haltefeder-Einsatz-Anordnung beschrieben, welche aus einer zweigeteilten Kammer zur Aufnahme einer Haltefeder dient; die Enden der Haltefederarme sind so ausgebildet, daß sie in Ausnehmungen eines Haltebolzens verriegelnd eingreifen können.

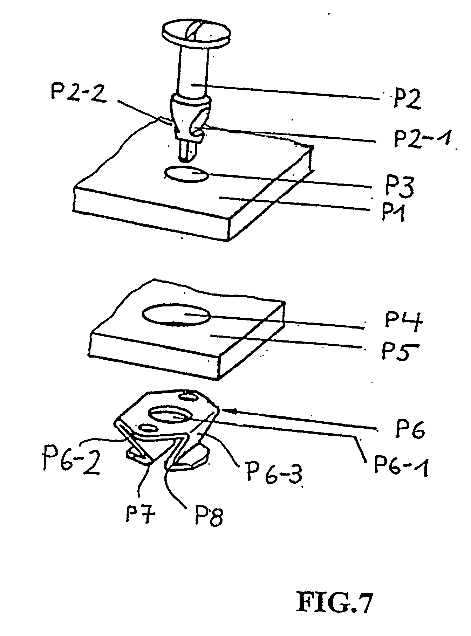

In dem deutschen Gebrauchsmuster G 813 695 8.1 ist eine Vorrichtung zum lösbaren Verbinden zweier mit fluchtenden Öffnungen versehener Bauteile beschrieben. Diese Vorrichtung (FIG. 7) besteht aus einem mit dem ersten Bauteil P1 verbundenen Haltebolzen P2, der durch die Öffnung P3 des ersten P1 und die Öffnung P4 des zweiten Bauteils P5 hindurchragt. Am Schaftende weist dieser Haltebolzen zwei seitliche Einkerbungen P2-1 und P2-2 auf. Desweiteren umfaßt diese Vorrichtung eine mit dem zweiten Bauteil P5 verbundene Haltefeder-Anordnung P6 mit einer zentralen Öffnung P6-1 für den Haltebolzen P2. Diese Haltefeder-Anordnung P6 weist zwei Federarm-Schrägen P6-2 und P6-3 auf, deren Enden P7 und P8 zum Eingriff in die Kerben P2-2 und P2-1 des Haltebolzens P2 ausgebildet sind.

Die vorstehend erwähnten Verbindungsanordnungen nach dem Stand der Technik gestatten keine Verschiebung eines Bauteils gegenüber dem anderen in einer Richtung. Desweiteren erfordert die Verbindungsanordnung gemäß EP-A-00611 002 die Einbringung des Gewindeeinsatzes in eines der beiden zur verbindenden Bauteile;
die Verbindungsanordnungen gemäß der anderen vorwähnten Schnriften sehen Bohrungen in beiden Bauteilen zum Hindurchführen des Halte-Bolzens vor.

Es ist deshalb Aufgabe der Erfindung, eine Verbindungsanordnung vorzusehen, welche ohne Bohrung in dem einen der beiden zu verbindenden Bauteile zum Hindurchführen des Haltebolzens auskommt und welche zudem eine Verschiebung des einen Bauteils gegenüber dem anderen in einer Richtung gestattet ( eine Verschiebung, die über den Toleranzbereich der Bohrung für den Haltebolzen hinausgeht.
Es ist weiterhin Aufgabe der Erfindung, eine solche Verbindungsanordnung platzsparend zu gestalten.

Diese Aufgaben der Erfindung werden in vorteilhafter Weise durch die kennzeichnenden Merkmale im Anspruch 1 gelöst.

Vorteilhafte Weiterbildungen der Erfindung sind in den Unteransprüchen gekennzeichnet.

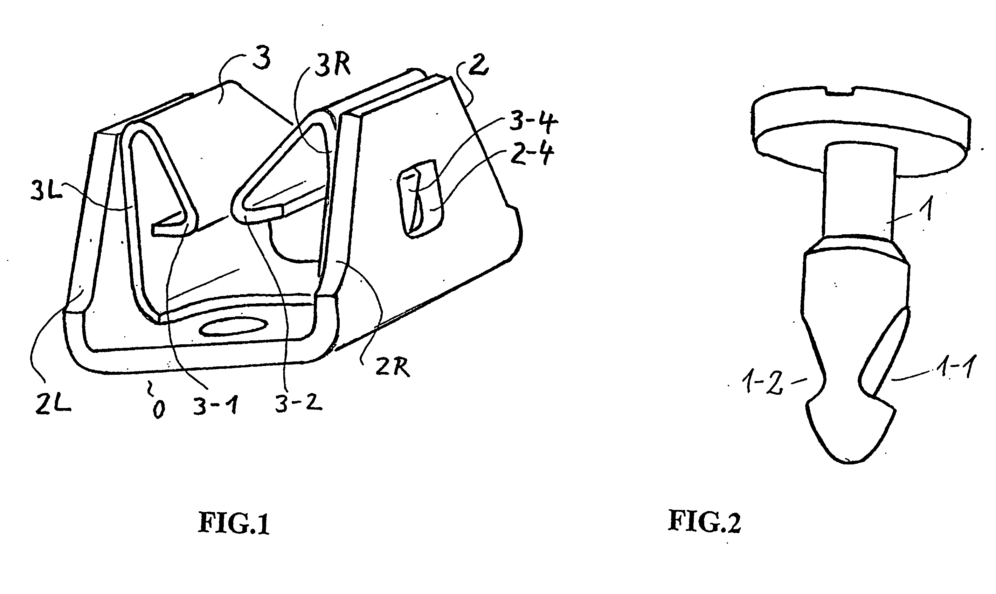

Ausführungsbeispiele der Erfindung sind in den Zeichnungen dargestellt und werden im folgenden näher beschrieben. Es zeigen:
FIG. 1
   eine perspektivische Darstellung einer erfindungsgemäßen Blattfeder-Halter-Anordnung, bestehend aus einem U-Profil-ähnlichen Halter und einer U-Profil-ähnliche Halte-Blattfeder,
FIG.2
   eine perspektivische Darstellung eines Haltebolzenz mit zwei seitlichen Kerben für den Eingriff der Blattfeder-Enden,
FIG.3A, FIG. 3B und FIG. 3C
   technische Zeichnungen der Halte-Blattfeder gemäß FIG. 1 in Vorder- und Seitenansicht sowie Draufsicht,
FIG.4A, FIG. 4B und FIG. 4C
   technische Zeichnungen des Halters gemäß FIG. 1 in Vorder- und Seitenansicht sowie Draufsicht,
FIG. 5A, FIG. 5B und FIG.5C
   Schnittansichten der erfindungsgemäßen Verbindungsanordnung zum lösbaren Verbinden zweier Bauteile unter Verwendung der Blattfeder-Halter-Anordnung gemäß FIG.1,
FIG.6A und FIG.6B
   Ansichten einer anderen erfindungsgemäßen Blattfeder-Halter-Anordnung , bestehend aus einem C-Profil-ähnlichen Halter und einer in diesen lösbar einsetzbaren U-Profil-ähnlichen Halte-Blattfeder,
FIG.7
   eine perspektivische Explosions-Darstellung einer aus einem drehbaren Haltebolzen und Halte-Blattfeder bestehenden Anordnung nach dem Stand der Technik zum Verbinden zweier Bauteile.

FIG. 1 zeigt
eine perspektivische Darstellung der erfindungsgemäßen Blattfeder-Halter-Anordnung 0.
Diese besteht aus einer Halte-Blattfeder 3, welche in einem U-Profil-ähnlichen Halter 2 lösbar eingesetzt ist.
Die Halte-Blattfeder weist eine modifizierte U-Profil-ähnliche Ausbildung auf.
Ihre freien sich gegenüberstehenden und voneinander beabstandeten Federarmenden 3-1 und 3-2 dienen dem gedachten Eingriff in die Haltekerben 1-1 und 1-2 eines Haltebolzens 1 (FIG. 2).

FIG.2 zeigt
eine perspektivische Darstellung des Haltebolzenz 1 mit zwei seitlichen Kerben 1-1 und 1-2 für den Eingriff der Halte-Blattfeder-Enden 3-1 und 3-2 (FIG. 1 u.a.).

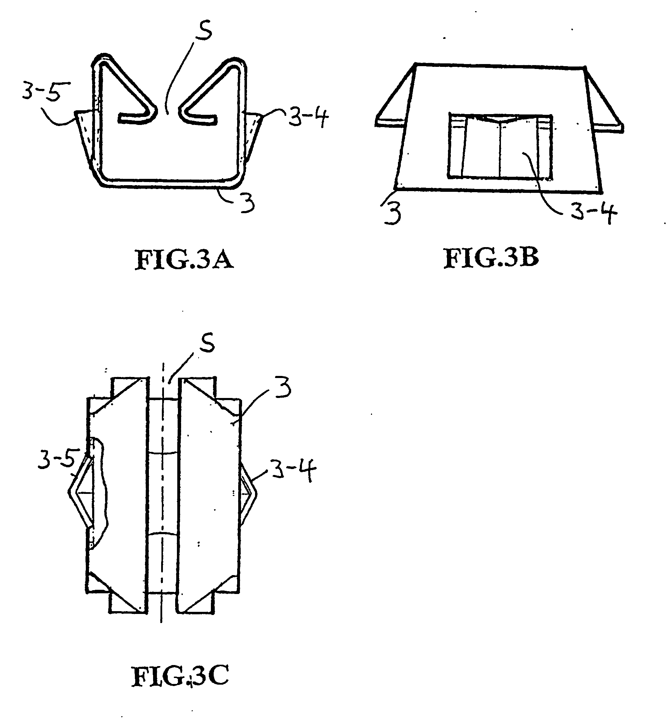

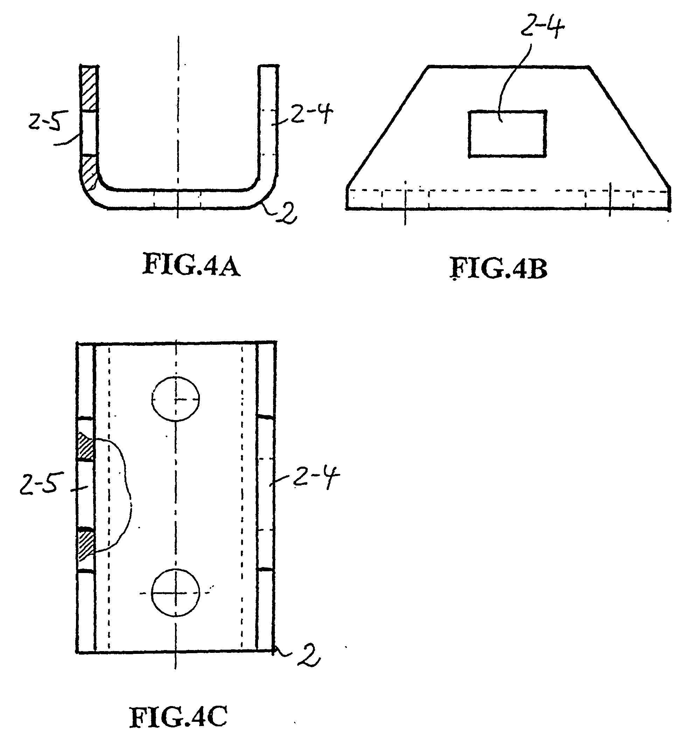

Einzelheiten der Halte-Blattfeder 3 und des Halters 2 sind in den Figuren 3A, 3B und 3C und FIG.4A, 4B und 4C dargestellt.

Die FIG. 3A, FIG. 3B und FIG. 3C zeigen
technische Zeichnungen der Halte-Blattfeder 3 gemäß FIG. 1 in Vorder- und Seitenansicht sowie Draufsicht.

Die FIG. 4A, FIG. 4B und FIG.4C zeigen
technische Zeichnungen des Halters 2 gemäß FIG. 1 in Vorderund Seitenansicht sowie Draufsicht.

Die Halte-Blattfeder 3 ( FIG. 1, FIG.3A, FIG. 3B und FIG.3C) weist an ihren äußeren Schenkel-Seiten 3R und 3L Vorsprünge ("Ausklinkungen") 3-4 und 3-5 auf. Beim Einsetzen der Halte-Blattfeder 3 in den Halter 2 "rasten" diese Vorsprünge in die Aussparungen 2-4 und 2-5 (FIG. 1, FIG.4A, FIG.4B und FIG.4C) der Wände 2R und 2L des Halters 2 ein.

Beim Einsetzen der Halte-Blattfeder 3 in den Halter 2 werden die U-Schenkel der Halte-Blattfeder vorübergehend etwas zusammengedrückt, bis das Einrasten der Vorsprünge in den Aussparungen erfolgt.

Zum Entfernen der Halte-Blattfeder aus dem Halter werden ebenfalls die U-Schenkel der Halte-Blattfeder 3 soweit zusammengedrückt, bis die Vorsprünge aus dem Bereich der Aussparungen gelangt sind und die Halte-Blattfeder entnommen werden kann.

Vorzugsweise sind die Aussparungen 2-4 und 2-5 als Durchbrüche in der Halterwand 2R und 2L ausgeführt. Solange der Halte-Bolzen in Rasteingriff mit der Halte-Blattfeder steht, ist ein Entfernen der Halte-Blattfeder aus dem Halter nicht möglich.

Die erfindungsgemäßen Blattfeder-Halter-Anordnung ist sehr platzsparend; der Halter wird vormontiert (z.B. durch Vernieten mit dem Bauteil MPl) und die Halte-Blattfeder nachträglich eingeclipst.

In Verbindung mit dem Halter kann die Halte-Blattfeder sehr hohe Haltekräfte aufnehmen; die maximale Haltekraft wird durch das Halter-Profil bestimmt.

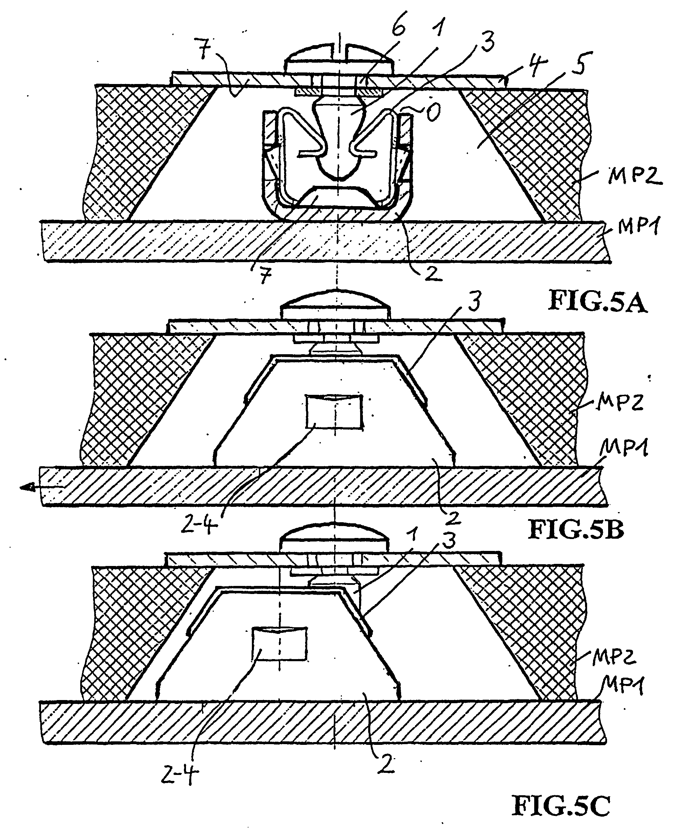

Die Halte-Blattfeder-Anordnung 0 kann als Teil einer Vorrichtung zum lösbaren Verbinden zweier Bauteile MP1 und MP2 (FIG.5A,B und C) eingesetzt werden.

Die FIG. 5A, FIG. 5B und FIG.5C zeigen Schnittansichten einer erfindungsgemäßen Verbindungsanordnung zum lösbaren Verbinden zweier Bauteile MP1 und MP2 in einer Vorder- und einer Seitenansicht der Blattfeder-Halter-Anordnung, wobei FIG.5C gegenüber FIG.5B die Möglichkeit einer Verschiebung des Bauteils MP1 gegenüber MP2 erkennen läßt.

Die Blattfeder-Halter-Anordnung 0, bestehend aus einem mit dem ersten Bauteil MP1 verbundenen U-Profil-ähnlichen Halter 2 und eine in diesen 2 lösbar einsetzbare modifizierte U-Profil-ähnliche Halte-Blattfeder 3, ist mit dem ersten Bauteil MP1 fest verbunden (z.B. durch Vernieten des Halters mit dem Bauteil MP1.

Die Blattfeder-Halter-Anordnung 0 ist in einer Öffnung 5 des zweiten Bauteils MP2 angeordnet. In diese Öffnung 5 ragt der Halte-Bolzen 1. Sein Kopf ist mit einem die Öffnung 5 des zweiten Bauteils MP2 abdeckenden Element 7 verbunden.
Dieses Element 7 ist vorzugsweise als Teller-Feder ausgeführt, um eine bessere gegenseitige Verschieblichkeit der Bauteile (unter Federvorspannung) zu gewährleisten.

Der Halte-Bolzen 1 ist durch die Bohrung 6 des Elements 7 gesteckt und mit einem Sicherungsring gesichert.
In der verriegelten Position rasten die Blattfeder-Enden in die Haltekerben des Halte-Bolzens 1 , wobei das Element 7 das Bauteil MP2 auf das Bauteil MP1 drückt.

Der mit zwei gegenüberliegenden Halte-Kerben versehene drehbare Halte-Bolzen kann entlang des zwischen den Blattfederenden (3-1, 3-2) gebildeten Spaltes (FIG.3A, 3C) verschoben werden, wenn die Bauteilen MP1, MP2 in dieser Spalt-Richtung eine Verschiebung erfahren und die Abmessung der Öffnung 5 im zweiten Bauteil dies zulaßt.

Aus FIG.5C ist zu erkennen, daß sich das Bauteil MP1 in Pfeilrichtung gegenüber dem Bauteil MP2 (im Vergleich zu FIG. 5B) verschoben hat. Bei dieser Verschiebung gelangt die Halte-Blattfeder-Anordnung in die Nähe des linken Öffnungsrandes, wobei sich der Halte-Bolzen im Spalt zwischen den (in seine Haltekerben eingreifenden) Blattfeder-Enden gleitend verschiebt.

Eine Blattfeder-Halter-Anordnung ohne Halter wäre bei vorgegebenem kleinen Montageraum für die Halte-Blattfeder mit einem verkürztem Verschiebeweg (des Haltebolzens im Haltefeder-Spalt) verbunden.

Zum Öffnen der Verbindungsanordnung wird der Halte-Bolzen um ca. 90 Grad gedreht. Dabei werden die zuvor in seine Haltekerben eingreifenden Blattfeder-Enden nach außen gespreizt, so daß sich anschließend der Halte-Bolzen (samt Element 7) durch die auf sein abgerundetes Bolzenende wirkende Federkraft von der Haltefeder abhebt.

Bei einer Verbindung der Bauteile MP1 und MP2 gemäß FIG. 5A, 5B und 5C ist eine Durchtrittsöffnung für den Haltebolzen im Bauteil MP1 nicht erforderlich. Dieses durch eine solche Öffnung ungeschwächte Bauteil MP1 kann dadurch vorzugsweise als feuerdämmende Platte o.ä. eingesetzt werden. Als Werkstoff bietet sich für hohe Temperaturbereiche z.B. rostfreier Stahl an.

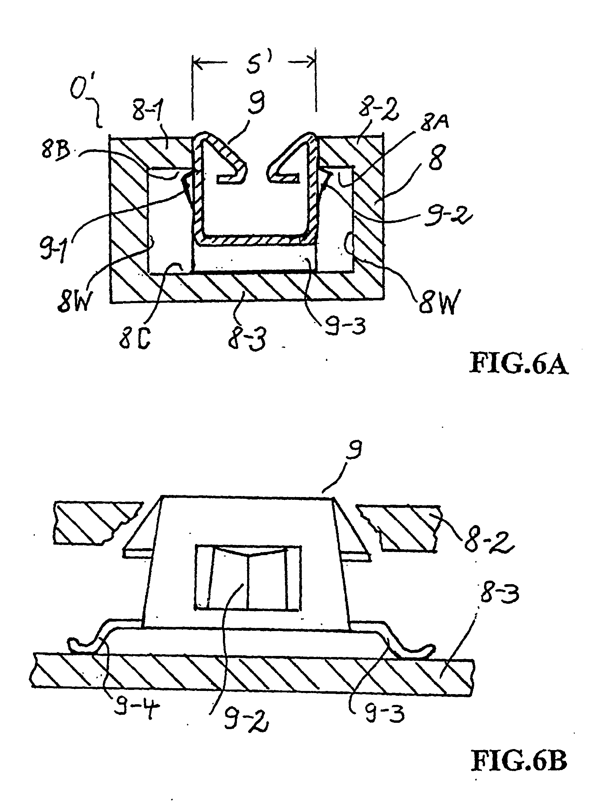

FIG.6A zeigt eine Schnittansicht einer anderen Ausführungsform der erfindungsgemäßen Blattfeder-Halter-Anordnung mit einem C-Profil-ähnlichen Halter 8 und einer in diesen einsetzbaren U-Profil-ähnlichen Halte-Blattfeder 9.
Der C-Profil-Halter 8 weist zwischen seinen freien Enden 8-1 und 8-2 einen Spalt S' auf. Durch diesen Spalt S' hindurch wird die Halte-Blattfeder 9 in den Halter 8 eingesetzt.
Die Halte-Blattfeder 9 (in FIG. 6A) entspricht in ihrer Ausbildung der in FIG.1, sie weist zusätzlich Federfüße 9-3 und 9-4 zur federnden Abstützung auf dem C-Profil-Boden 8C auf.

Die Halte-Blattfeder 9 hat an ihren äußeren Schenkel-Seiten federnde Vorsprünge 9-1, 9-2 , mit denen sie sich gegen die Unterseite 8A und 8B der freien Profilarme 8-1 und 8-2 abstützt.

FIG. 6B
zeigt die Seitenansicht der Halte-Blattfeder 9 gemäß FIG. 6A in Verbindung mit einer auszugsweisen Schnittansicht des Profilarmes 8-2 und der Profil-Basis 8-3.

In dieser Darstellung sind die Federfüße 9-3 und 9-4 als Bestandteil der Halte-Blattfeder 9 zu erkennen, mit denen sie sich am Profilboden abstützt. Durch die sich an den Profilarmen abstützenden Vorsprünge 9-1 und 9-2 und durch die sich am Profilboden 8-3 abstützenden Federfüße 9-3 und 9-4 ist die Lage der Halte-Blattfeder im C-Profil festgelegt.

Es sei betont, daß die Ausbildung der Vorsprünge 9-1 und 9-2 der Halte-Blattfeder auch eine andere sein kann als in den FIG. 1 oder FIG.6A und 6B dargestellt. Diese Vorsprünge werden vorzugsweise durch Herausdrücken von Teilen der Seitenwandung der Halte-Blatteder gebildet ; dabei können Randteile des herausgedrückten Bereiches von der Seitenwandung der Halte-Blattfeder abgetrennt sein. Die Form der Vorsprünge muß so gewählt sein, daß sie entweder von Aussparungen im Profil des Halters aufnehmbar sind (FIG.l) oder als Anschlag (FIG6A) dienen können, um ein Herausgleiten der Halte-Blattfeder aus dem Inneren des Halters zu verhindern.

Für die Ausbildung der Federfüße der Halte-Blattfeder gemäß FIG. 6B in Verbindung mit dem C-Profil-Halter gibt es auch beliebige Abwandlungsmöglichkeiten, die jedoch alle darauf hinauslaufen, daß die Halte-Blattfeder im Profilinneren eine definierte Lage einnimmt. Dies ist z.B. durch federnde Elemente mäglich, die die Halte-Blattfeder an den Seitenwänden und/ oder dem Boden des Halters abstützen.

## Patentansprüche

1. Blattfeder-Halter-Anordnung bestehend aus einem Halter und einer in diesen einsetzbaren Halte-Blattfeder mit zwei sich gegenüberstehenden voneinander beabstandeten freien Blattfederenden zum gedachten Eingriff in mindestens eine Vertiefung eines zwischen ihnen einführbaren Halte-Bolzens,
**dadurch gekennzeichnet, daß**
der Halter (2) eine U- profil-ähnliche Ausbildung aufweist mit einer Halter-Basis und 2 Halter-Schenkelseiten (2L, 2R), daß die Halte-Blattfeder (3) eine modifizierte U-Profil-ähnliche Ausbildung mit einer Blattfeder-Basis und zwei Blattfeder-Schenkelseiten (3L, 3R) aufweist,
daß sich die oberen Ränder der Blattferder-Schenkelseiten (3L, 3R) in aufeinanderzulaufenden Schrägen fortsetzen, deren einander zugewandten Federarm-Enden (3-1, 3-2) voneinander beabstandet (S) sind für den gedachten dazwischen anordnungsbare Halte-Bolzen (1),
daß die Blattfeder (3) derart im Halter(2) anordnungsbar ist, daß die inneren Halter-Schenkelseiten für die äußeren Blattfeder-Schenkelseiten einen Anschlag bilden, wenn die Halte-Blattfeder (3) bei einer gedachten Verbindung mit dem Halte-Bolzen (1) derart belastet ist, daß ihre Haltefeder-Schenkelseiten (3L, 3R) gegen die Halter-Schenkelseiten (2L, 2R) gedrückt werden.

2. Anordnung nach Anspruch 1,
**dadurch gekennzeichnet, daß**
jede Halter(8)schenkelseite einen Vorsprung (8-1, 8-2) mit einer Haltefeder (9) seitigen Stirnfläche aufweist und daß diese Stirnfläche für die ihr zugewandte äußere Blattfeder-Schenkelseite einen Anschlag bildet,
wenn die Halte-Blattfeder (9) bei gedachter Verbindung mit dem Halte-Bolzen derart belastet ist, daß ihre Haltefeder-Schenkelseiten gegen die Stirnflächen gedrückt werden.

3. Anordnung nach Anspruch 1,
**dadurch gekennzeichnet,**
**daß** die Halte-Blattfeder (3) an ihren äußeren Schenkel-Seiten (3R, 3L) Vorsprünge (3-4, 3-5) aufweist und
**daß** der Halter (2) an seinen Schenkel-Seiten (2R, 2L) Aussparungen (2-4, 2-5) zur Aufnahme dieser Vorsprünge (3-4, 3-5) aufweist.

4. Anordnung nach Anspruch 3,
**dadurch gekennzeichnet,**
**daß** die Aussparungen (2-4, 2-5) Durchbrüche in der Halterwandung (2R, 2L) sind.

5. Anordnung nach Anspruch 2,
**dadurch gekennzeichnet,**
**daß** die Halte-Blattfeder (9) an ihren äußeren Schenkel-Seiten Vorsprünge (9-1, 9-2) aufweist, durch die die Halte-Blattfeder (9) an der Innenwandung (8A, 8B) des Halters (8) abstützbar ist.

6. Anordnung nach Anspruch 2,
**dadurch gekennzeichnet, daß**
die Halte-Blattfeder (9) Federteile (9-3, 9-4) aufweist, mit denen sie gegen den Boden (8C) und/oder die Wandungen (8W) des Halters (8) abstützbar ist.

7. Verbindungsanordnung umfassend eine Blattfeder-Halter-Anordnung nach Anspruch 1 oder 2,
**dadurch gekennzeichnet, daß**
die Blattfeder-Halter-Anordnung (0:0') mit einem ersten Bauteil (MP1) und der Halte-Bolzen mit einem zweiten Bauteil (MP2) verbunden ist,
wobei die Blattfeder-Halter-Anordnung (0;0') in einer Öffnung (5) des zweiten Bauteils (MP2) angeordnet ist und der in diese Öffnung ragende Halte-Bolzen (1) mit einem die Öffnung (5) des zweiten Bauteils (MP2) überdeckenden Element (7) verbunden ist.

8. Anordnung nach Anspruch 7,
**dadurch gekennzeichnet, daß**
das Element (7) ein federndes Element, insbesondere eine Tellerfeder, ist.

9. Anordnung nach einem der Ansprüche 7 bis 8,
**dadurch gekennzeichnet, daß**
der Halte-Bolzen (1) in der Blattfeder-Halter-Anordnung (0; 0') entlang des zwischen den Blattfederenden gebildeten Spaltes (S;S') verschiebbar ist, wenn zwischen den Bauteilen (MP1, MP2) in Spalt-Richtung eine Verschiebung erfolgt.

## Claims

1. Leaf spring retainer arrangement consisting of a retainer a retaining leaf spring insertable into it with two free leaf-spring ends opposite and at a distance from one another for imaginary engagement in at least one recess of a retaining bolt which is insertable between them,
**characterised in**
**that** the retainer (2) has a feature similar to a U-profile with a retainer base and two retainer sides (2L, 2R),
**that** the retaining leaf-spring (3) has a modified similar to a U-profile with a leaf-spring base and two leaf-spring sides (3L, 3R),
**that** the upper edges of the leaf-spring sides (3L, 3R), continue in converging diagonals, the ends of whose spring arms (3-1, 3-2) are at a distance (S) from one another to receive the imaginary retaining bolt (1) located between them,
**that** the leaf-spring (3) is arranged in the retainer (2) in such a way that the inner sides of the retainer form a stop for the outer sides of the retainer when the imaginary connection with the retaining bolt (1) exists and the retaining leaf-spring (3), is subjected to sufficient force to press the retaining spring sides (3L, 3R) against the sides of the retainer (2L, 2R).

2. Arrangement according to claim 1,
**characterised in that**
each retainer (8) side has a projection (8-1, 8-2) with a front surface on the same side as the retaining spring (9) and that this front surface forms a stop for the outer side of the leaf-spring facing it when the imaginary connection with the retaining bolt exists, and the retaining leaf-spring (9), is subjected to sufficient force to press its retaining-spring sides against the front surfaces.

3. Arrangement according to claim 1,
**characterised in that**
the retaining leaf-spring (3) has projections (3-4, 3-5) on its outer sides (3R, 3L) and that the retainer (2) has recesses (2-4, 2-5) on its sides (2R, 2L) to receive these projections (3-4, 3-5).

4. Arrangement according to claim 3,
**characterised in that**
the recesses (2-4, 2-5) are openings in the retainer wall (2R, 2L).

5. Arrangement according to claim 2,
**characterised in that**
the retaining leaf-spring (9) has projections (9-1, 9-2) on its outer sides, through which the retaining leaf-spring (9) can be supported on the inner wall (8A, 8B) of the retainer (8).

6. Arrangement according to claim 2,
**characterised in that**
the retaining leaf-spring (9) has spring parts (9-3, 9-4) with which it can be supported against the bottom (8C) and/or the walls (8W) of the retainer (8).

7. Connection arrangement comprising a leaf-spring retainer arrangement according to claim 1 or claim 2,
**characterised in that**
the leaf-spring retainer arrangement (0:0') is connected with a first component (MP1) and the retaining bolt is connected with a second component (MP2),
whereby the leaf-spring retainer arrangement (0:0') is arranged in an opening (5) of the second component (MP2), and the retaining bolt (1) projecting into this opening is connected with an element (7) covering the opening (5) of the second component (MP2).

8. Arrangement according to claim 7,
**characterised in that**
the element (7) is a resilient element, in particular a disk spring.

9. Arrangement according to one of the claims 7 to 8,
**characterised in that**
the retaining bolt (1) in the leaf-spring retainer arrangement (0:0') can be moved along the gap (S;S') formed between the ends of the leaf spring, when a shift takes place between the components (MP1, MP2) in gap direction.

## Revendications

1. Dispositif de fixation à ressort à lames composé d'une fixation et d'un ressort à lames de fixation pouvant être introduit dans celle-ci avec deux extrémités libres de ressort à lames se faisant face et espacées l'une de l'autre, destinées à se mettre en prise dans au moins un renfoncement d'un goujon de fixation pouvant être introduit entre elles, **caractérisé en ce que** la fixation (2) présente une structure en forme de profilé en U avec une base de fixation et deux côtés de fixation en forme de bras (2L, 2R),
**en ce que** le ressort à lames de fixation (3) présente une structure en forme de profilé en U modifiée avec une base de ressort à lames et deux côtés de ressort à lames en forme de bras (3L, 3R),
**en ce que** les bords supérieurs des côtés de ressort à lames en forme de bras (3L, 3R) se prolongent en biseaux orientés l'un vers l'autre, dont les extrémités de ressort à lames (3-1, 3-2) orientées l'une vers l'autre sont écartées (S) l'une de l'autre pour le goujon de fixation (1) destiné à être disposé entre elles,
**en ce que** le ressort à lames (3) peut être disposé dans la fixation (2) de telle manière que les côtés de fixation en forme de bras intérieurs forment une butée pour les côtés de ressort à lames en forme de bras extérieurs, lorsque le ressort à lames de fixation (3) est mis en charge avec le goujon de fixation (1) dans un assemblage envisagé, de telle manière que ses côtés de ressort à lames en forme de bras (3L, 3R) soient poussés contre les côtés de fixation en forme de bras (2L, 2R).

2. Dispositif selon la revendication 1, **caractérisé en ce que** chaque côté de fixation formant bras (8) présente une saillie (8-1, 8-2) avec une face orientée vers le ressort de fixation (9) et **en ce que** cette face forme une butée pour le côté de ressort à lames en forme de bras orienté vers elle lorsque le ressort à lames de fixation (9) est mis en charge avec le goujon de fixation dans un assemblage envisagé de telle manière que ses côtés de ressort à lames en forme de bras soient poussés contre les faces.

3. Dispositif selon la revendication 1, **caractérisé en ce que** le ressort à lames de fixation (3) présente sur ses côtés en forme de bras (3L, 3R) extérieurs des saillies (3-4, 3-5) et **en ce que** la fixation (2) présente sur ses côtés en forme de bras (2L, 2R) des évidements (2-4, 2-5) destiné à recevoir ces saillies (3-4, 3-5).

4. Dispositif selon la revendication 3, **caractérisé en ce que** les évidements (2-4, 2-5) sont des ouvertures dans la paroi de la fixation (2R, 2L).

5. Dispositif selon la revendication 2, **caractérisé en ce que** le ressort à lames de fixation (9) présente sur ses côtés en forme de bras extérieurs des saillies (9-1, 9-2) par lesquelles le ressort à lames de fixation (9) peut s'appuyer sur la paroi intérieure (8A, 8B) de la fixation (8).

6. Dispositif selon la revendication 2, **caractérisé en ce que** le ressort à lames de fixation (9) présente des parties de ressort (9-3, 9-4) par lesquelles il peut s'appuyer contre le fond (8C) et/ou les parois (8W) de la fixation (8).

7. Dispositif d'assemblage comprenant un dispositif de fixation à ressort à lames selon la revendication 1 ou 2, **caractérisé en ce que** le dispositif de fixation à ressort à lames (0 ; 0') est relié avec un premier élément (MP1) et le goujon de fixation avec un deuxième élément (MP2), le dispositif de fixation à ressort à lames (0 ; 0') étant disposé dans une ouverture (5) du deuxième élément (MP2) et le goujon de fixation (1) qui dépasse dans cette ouverture étant assemblé avec un élément (7) recouvrant l'ouverture (5) du deuxième élément (MP2).

8. Dispositif selon la revendication 7, **caractérisé en ce que** l'élément (7) est un élément élastique, en particulier une rondelle-ressort.

9. Dispositif selon l'une quelconque des revendications 7 à 8, **caractérisé en ce que** le goujon de fixation (1) peut coulisser dans le dispositif de fixation à ressort à lames (0 ; 0') le long de l'interstice (S ; S') formé entre les extrémités du ressort à lames lorsqu'une translation a lieu entre les éléments (MP1, MP2) dans le sens de l'interstice.
